Europäisches Patentamt

European Patent Office

Office européen des brevets

(11) Numéro de publication: **0 239 503 B1**

(12) **FASCICULE DE BREVET EUROPEEN**

(45) Date de publication de fascicule du brevet:
**18.12.91**

(51) Int. Cl.⁵: **H04M 1/66,** H04M 3/38,
H04M 3/36

(21) Numéro de dépôt: **87400696.8**

(22) Date de dépôt: **27.03.87**

(54) **Procédé et installation de surveillance de communications, notamment téléphoniques.**

(30) Priorité: **27.03.86 FR 8604497**

(43) Date de publication de la demande:
**30.09.87 Bulletin 87/40**

(45) Mention de la délivrance du brevet:
**18.12.91 Bulletin 91/51**

(84) Etats contractants désignés:
**DE FR GB**

(56) Documents cités:
**DE-A- 2 323 663**
**FR-A- 2 305 075**

(73) Titulaire: **Gottesman, Victor**
**49, rue Lamennais**
**F-92370 Chaville(FR)**

(72) Inventeur: **Gottesman, Victor**
**49, rue Lamennais**
**F-92370 Chaville(FR)**

(74) Mandataire: **Arnaud, Jean Pierre Alfred**
**Cabinet Arnaud 94 rue Saint-Lazare**
**F-75009 Paris(FR)**

## Description

La présente invention concerne un procédé et une installation de surveillance de communications, par exemple échangées entre des postes téléphoniques.

Bien qu'on décrive l'invention en référence à la surveillance de communications téléphoniques elle s'applique évidemment à toutes les installations dans lesquelles des informations sont échangées à partir d'appareils identifiables.

On connait déjà, d'après le brevet britannique n° 2 104 347, des postes téléphoniques dans lesquels les communications ne sont établies que lorsque la personne voulant obtenir une communication a introduit un numéro personnel d'identification. Le poste détermine ensuite, d'après les premiers chiffres du numéro appelé, si la communication peut être autorisée. Un inconvénient de cette installation, comme de toutes celles qui demandent un code de validation, est que ces codes sont facilement connus de personnes non habilitées. Un autre inconvénient est qu'il suffit de disposer d'un poste téléphonique ordinaire pour pouvoir obtenir, sans restriction aucune, n'importe quelle communication, par remplacement du poste existant.

On connait aussi, d'après la demande de brevet français n° 2 305 075, des installations dans lesquelles les postes émetteurs comportent des appareils de lecture et de validation de communications. Les utilisateurs disposent de supports d'informations qui portent des données d'identification de l'utilisateur et des données d'autorisation représentatives d'une table des communications autorisées.

Une telle installation présente des avantages indéniables car elle permet une maitrise efficace des communications. Cependant, elle présente deux inconvénients importants. D'abord, l'appareil qui reçoit les données relatives à la communication demandée, qui les compare à la table de communications autorisées portée par le support d'informations et qui valide l'établissement de la communication, est placé près du poste émetteur auquel il est de préférence intégré. En conséquence , dans le cas des postes téléphoniques raccordés aux lignes d'abonnés par des conjoncteurs, il est très simple de déconnecter du conjoncteur l'ensemble formé par le poste émetteur et l'appareil de validation, et de le remplacer par un simple poste téléphonique actuellement très répandu. Ensuite, la gestion des supports d'information est très lourde, car les supports doivent être échangés dès que la table des communications autorisées doit être modifiée. Ces échanges doivent être relativement fréquents, étant donné l'évolution des tarifications téléphoniques et les changements d'affectation du personnel.

On connait aussi, d'après le brevet des Etats-Unis d'Amérique n° 4 332 982, une installation téléphonique d'un type analogue, dans laquelle des circuits de mémorisation de la table de communications autorisées, de comparaison et de validation sont groupés à proximité du poste émetteur. L'installation n'utilise pas de supports d'informations et présente les mêmes inconvénients que la précédente.

Le document DE-A-2 323 663 décrit un procédé de surveillance de communications téléphoniques correspondant au préambule de la revendication 1. Dans ce procédé, des clés de trois types différents coopèrent avec des serrures des postes téléphoniques, chaque type de clé donnant accès à des niveaux différents d'autorisation (local, national, international) mais ne permettant l'identification du porteur de clé.

L'invention concerne un procédé de surveillance dans lequel des informations sont échangées à partir de postes émetteurs et par l'intermédiaire de lignes de communication, du type qui comprend la lecture de premières données, la détermination d'une table de communications autorisées parmi des tables de communications autorisées qui sont conservées à un même emplacement distant, la formation de données de demande de mise en communication par le poste émetteur, la comparaison d'une partie au moins des données de demande de mise en communication à la table de communications autorisées, et la validation de l'établissement de la communication demandée d'après le résultat de la comparaison, caractérisée en ce que les premières données sont des données d'identification d'une personne émettrice, la lecture des premières données est réalisée dans le poste émetteur ou à proximité de celui-ci, la détermination de la table des communications autorisées est effectuée d'après l'identification de la personne émettrice, et les tables de communications autorisées peuvent être modifiées.

Dans un mode de réalisation, la table des communications autorisées est transmise de l'emplacement distant vers le poste émetteur, et la comparaison et la validation sont exécutées dans le poste émetteur ou à proximité de celui-ci.

Dans un autre mode de réalisation plus avantageux, une partie au moins des données de demande de mise en communication est transmise à l'emplacement distant où la comparaison avec la table de communications autorisées est réalisée. Bien que la validation puisse alors être exécutée dans le poste émetteur ou à proximité de celui-ci, en fonction d'une commande provenant de l'emplacement distant, il est avantageux que cette validation soit exécutée à l'emplacement distant.

Lorsque le procédé est destiné à la surveillance de plusieurs postes émetteurs, il est avantageux que certaines tables de communications autorisées au moins aient des parties communes qui peuvent être modifiées. Il est alors aussi avantageux que chaque table de communications autorisées soit constituée par des parties au moins d'un tableau commun dont les différentes parties sont déterminées en fonction de paramètres, notamment de distance et d'heure.

Dans un mode de réalisation, la table de communications autorisées est modifiée en fonction d'informations relatives à des communications établies antérieurement.

Dans une variante, le procédé comprend aussi l'écriture d'un compte-rendu ou d'un débit, relatif à une communication établie, sur le support de données associé au poste émetteur.

Dans une autre variante, le procédé comprend, après l'établissement de la communication, la transmission de données supplémentaires par le poste émetteur, la comparaison d'une partie au moins de ces données supplémentaires à une table secondaire de communications autorisées, et la validation de la transmission des données supplémentaires en fonction du résultat de la comparaison à la table secondaire.

L'invention concerne aussi une installation de surveillance de communications destinée à la mise en oeuvre du procédé précédent, et comportant :

- au moins un poste émetteur destiné à transmettre des données de demande de mise en communication,
- des supports de données relatives à l'identification d'un utilisateur,
- au moins un circuit de lecture des supports de données, relié à un poste émetteur ou à un groupe de postes émetteurs,
- un circuit de mémorisation d'au moins une table de communications autorisées, relié à au moins un circuit de lecture, et disposé à un emplacement distant de celui du poste émetteur,
- un circuit de comparaison relié au poste émetteur et au circuit de mémorisation et destiné à comparer une partie au moins des données de demande de mise en communication provenant du poste émetteur à des données de la table des communications autorisées correspondant à l'utilisateur considéré,
- un circuit de validation d'établissement de communication, commandé par le circuit de comparaison et destiné à mettre en relation le poste émetteur et la ligne sortante.

Dans un mode de réalisation, le circuit de comparaison et le circuit de validation sont disposés à proximité du poste émetteur et du dispositif de lecture.

Dans un autre mode de réalisation plus avantageux, le circuit de comparaison est disposé à l'emplacement distant avec le dispositif de mémorisation. En outre, il est alors avantageux que le circuit de validation soit aussi disposé à l'emplacement distant, les circuits de mémorisation, de comparaison et de validation étant de préférence associés à un autocommutateur.

D'autres caractéristiques et avantages de l'invention ressortiront mieux de la description qui va suivre d'exemples de réalisation, faite en référence aux dessins annexés sur lesquels :

- la figure 1 est un diagramme synoptique représentant une installation de surveillance de communications téléphoniques selon l'invention, comprenant un autocommutateur ;
- la figure 2 est un diagramme synoptique plus détaillé d'un circuit de lecture de supports d'informations et de validation d'établissement de communications, associé à un poste téléphonique ; et
- la figure 3 est un diagramme synoptique d'un circuit d'interrogation d'une installation selon l'invention.

On décrit d'abord, en référence aux dessins, un premier mode de réalisation de l'invention dans lequel les différentes opérations du procédé mis en oeuvre sont réalisées dans des circuits spécialisés.

Des postes téléphoniques 10 sont reliés, par des lignes téléphoniques 16, à un autocommutateur privé 12 lui-même relié au réseau commuté par des lignes 14. Chaque poste 10 est relié à l'autocommutateur et à un circuit 18 de lecture et de validation. Ce circuit assure la lecture de premières données représentant une identification totale ou partielle de l'utilisateur, demande à l'autocommutateur 12 qu'il lui transmette la table des communications autorisées correspondant à ces données, puis compare la totalité ou une partie des données représentatives de la communication demandée à cette table et valide ou non l'établissement de la communication par la ligne 16. En outre, ce circuit garde normalement des données relatives au coût de la communication réalisée, et éventuellement le numéro appelé, la durée de la communication, la date et l'heure, etc.

Le circuit 18 est relié par la ligne 16 à l'autocommutateur 12 qui, en plus de ses fonctions habituelles, conserve les tables de communications autorisées des diverses cartes de support d'informations qui peuvent être utilisées. Par exemple, il comporte un tableau général de toutes les possibilités d'établissement de communications, en fonction de la position géographique et de l'heure de la communication notamment, et les tables de communications des différents utilisateurs sont formées par juxtaposition de certains domaines du tableau général.

Un circuit d'interrogation 20, éventuellement associé à une console 22 et à un éditeur 24 de cartes constituant les supports des premières données, est aussi relié à l'autocommutateur 12. Lors du fonctionnement normal, les communications sont échangées entre les postes 10 et d'autres postes du réseau interne ou du réseau commuté par l'intermédiaire de l'autocommutateur 12. A certains moments, par exemple une fois par jour, le circuit 20 interroge les circuits de validation 18 dont il reçoit des données destinées à subir un traitement immédiat ou différé, par exemple pour la facturation dans l'entreprise.

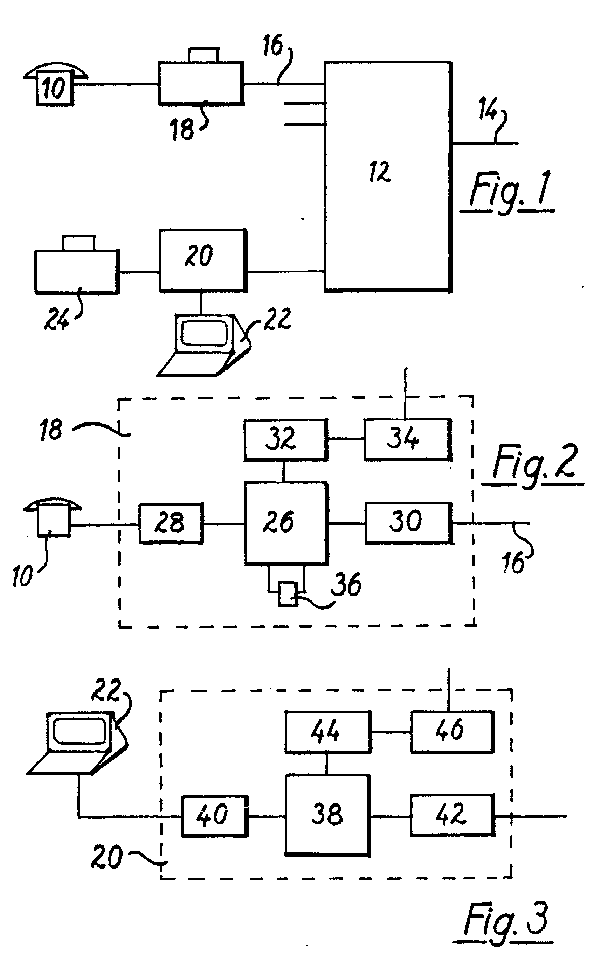

La figure 2 représente plus en détail le circuit 18 de lecture et de validation. Il est construit autour d'une unité centrale de traitement 26, reliée au poste 10 par une interface poste 28 et à la ligne 16 de l'autocommutateur par une interface ligne 30. Ces interfaces sont bien connues dans la technique et on ne les décrit pas plus en détail. Un lecteur de cartes 32 est associé à l'unité centrale 26 et l'appareil comporte en outre une alimentation 34 reliée par exemple au secteur et une batterie de sauvegarde 36.

Le lecteur 32 est destiné à lire les premières données sur un support qui est de préférence une carte, comme décrit dans la suite du présent mémoire. Les informations transmises par le lecteur 32 à l'unité centrale 26 sont relatives à l'identification de l'utilisateur. Il peut s'agir d'une identification totale, permettant la connaissance sans ambiguïté de l'utilisateur, par exemple afin qu'il puisse être débité du coût de la communication. Il peut aussi s'agir d'une identification partielle, indiquant simplement l'appartenance de l'utilisateur à un groupe déterminé, par exemple une entreprise particulière ou un certain niveau hiérarchique. Il est important de noter cependant à ce propos que les données portées par la carte ne permettent pas la validation de l'établissement de la communication, mais permettent seulement la consultation d'une table des communications autorisées, cette table étant conservée à distance de l'appareil de lecture, par exemple dans l'autocommutateur 12.

Dans une variante, la carte de support des premières données peut être utilisée pour d'autres opérations. Ainsi, la carte peut porter des données destinées à préciser la table de communications autorisées à utiliser. Par exemple, la carte, en plus de l'identification, peut contenir des données représentatives d'un programme de variation de la table de communications. Un tel programme est par exemple le suivant : le porteur d'une carte a accès un certain nombre de fois à une première table lui permettant toutes les communications ; lorsque ce nombre a été atteint, il n'a plus accès qu'à une autre table plus réduite, éliminant par exemple les appels à grande distance. Le changement de table, dans l'exemple précité, est une simple réduction du nombre de domaines autorisés dans le tableau général. Bien que le programme puisse être géré au niveau du circuit de lecture et de validation, il est cependant préférable qu'il soit géré au niveau du circuit qui conserve la table, l'autocommutateur dans le cas considéré ; dans une variante, il est géré directement dans la carte, lorsque le lecteur 32 est aussi un appareil d'écriture. Dans ce dernier cas, la carte peut conserver diverses données relatives à la communication, à la somme des communications, et à diverses autres fonctions.

La figure 3 représente un circuit d'interrogation qui permet la collecte des informations mémorisées dans les différents circuits de lecture et de validation 18. Il peut assurer un traitement au moins partiel des informations recueillies, par exemple l'établissement d'états représentatifs des communications relatives à chaque carte d'utilisateur. Il comprend une unité centrale de traitement 38 éventuellement reliée à une unité externe de traitement, représentée par une console 22, par une interface 40 et à une ligne rejoignant l'autocommutateur par une interface ligne 42. Il peut en outre comprendre un éditeur de cartes 44 et une alimentation 46. Il faut cependant noter que cet éditeur de cartes n'est que peu utilisé étant donné que les cartes ne sont normalement pas modifiées, une fois qu'elles ont été établies, contrairement aux cartes des systèmes dans lesquels la carte contient la table des communications autorisées.

Le support d'informations peut être de tout type qui peut être facilement transporté et lu occasionnellement. Il peut s'agir d'un badge ou d'une carte, par exemple une carte à mémoire. De préférence, il s'agit d'une carte à mémoire de type CP8 de la société Bull. Dans ce dernier cas, le lecteur peut comporter un circuit spécial permettant la destruction de la carte, par exemple lorsqu'une carte perdue est utilisée frauduleusement.

Bien qu'on ait décrit un mode de réalisation dans lequel le circuit de lecture de carte assure aussi la comparaison et la validation de l'établissement de la communication, et dans lequel un circuit particulier effectue l'interrogation des circuits conservant les données relatives à la communication, d'autres modes de réalisation sont possibles. Leur caractéristique commune est la conservation de la table des communications autorisées à distance du poste émetteur, afin que l'utilisateur de celui-ci ne puisse pas agir sur l'ensemble du processus et ne puisse donc pas le contourner en totalité.

Dans un exemple opposé à l'exemple décrit précédemment, toutes les opérations, à part la lecture des premières données portées par la carte, sont effectuées dans l'autocommutateur ou à proximité de celui-ci. Dans ce cas, lorsque la carte a été placée dans le lecteur et que le numéro a été composé sur le poste, le dispositif de traitement de l'autocommutateur assure la recherche dans ses mémoires de la table applicable, la comparaison à cette table d'informations tirées du numéro composé, et la validation de l'établissement de la communication par l'autocommutateur lorsque la comparaison donne le résultat voulu. Le dispositif de traitement peut en outre assurer la gestion de la surveillance, avec établissement de relevés ou de factures, et tenue d'états statistiques.

Bien entendu, l'autocommutateur peut remplir diverses fonctions supplémentaires telles que l'affichage, sur un dispositif d'affichage du poste appelé, de l'identité de la personne appelante, le transfert de communications, par exemple en salle de conférences, des fonctions de gardiennage, de surveillance d'horaires variables, etc. Par exemple, les lecteurs peuvent être utilisés pour la lecture de données portées par des cartes introduites par des gardiens au cours de leur ronde. Dans ce cas, la lecture peut être commandée soit directement par le lecteur, soit par simple décrochage du combiné du poste associé. Les lecteurs sont ainsi utilisés comme simple organes de saisie de données, sans qu'un câblage supplémentaire soit nécessaire.

Dans une variante, il est souhaitable que le circuit de comparaison, de préférence l'autocommutateur, utilise une comparaison et une validation en deux ou plusieurs étapes. Ainsi, certaines tables de validation peuvent contenir l'indicatif 3615, soit sans restriction, soit avec une restriction de durée de communication, mais sans restriction sur un second indicatif. D'autres au contraire peuvent contenir, avec l'indicatif 3615, un adressage à une table secondaire qui contient les codes des services télématiques autorisés. Dans ce cas, après comparaison et autorisation de l'établissement de la communication suivant la réception du code 3615, le nouveau code, à un format différent, transmis par le poste après l'établissement de la communication, est comparé à la table secondaire ; si la comparaison indique que la communication n'est pas autorisée, le code n'est pas transmis au réseau commuté.

Bien qu'on ait décrit une installation comprenant plusieurs postes émetteurs, l'invention s'applique au cas d'un seul poste : plusieurs utilisateurs ayant des cartes différentes utilisent le même poste mais ont accès à des communications différentes, car les tables de communications autorisées sont liées aux cartes et non aux postes. Cependant, dans une installation à plusieurs postes, les deux systèmes peuvent être combinés : certains postes, facilement identifiés par l'autocommutateur, donnent accès à une table supplémentaire de communications autorisées.

L'installation décrite permet ainsi non seulement la simple surveillance des communications, mais aussi leur gestion véritable, car elle permet l'utilisation d'un même réseau par des utilisateurs d'entreprises ou de services différents, sans que chaque entreprise, chaque service ou même chaque utilisateur perde la maîtrise de sa propre consommation.

On n'a décrit et envisagé qu'un petit nombre seulement des nombreuses possibilités d'application de l'invention. Cependant, l'homme du métier pourra facilement appliquer celle-ci à d'autres domaines.

## Revendications

1. Procédé de surveillance dans lequel des informations sont échangées à partir de postes émetteurs (10) et par l'intermédiaire de lignes de communication (16), du type qui comprend la lecture de premières données, la détermination d'une table de communications autorisées parmi des tables de communications autorisées qui sont conservées à un même emplacement distant, la formation de données de demande de mise en communication par le poste émetteur, la comparaison d'une partie au moins des données de demande de mise en communication à la table de communications autorisées, et la validation de l'établissement de la communication demandée d'après le résultat de la comparaison, caractérisée en ce que les premières données sont des données d'identification d'une personne émettrice, la lecture des premières données est réalisée dans le poste émetteur ou à proximité de celui-ci, la détermination de la table des communications autorisées est effectuée d'après l'identification de la personne émettrice, et les tables de communications autorisées peuvent être modifiées.

2. Procédé selon la revendication 1, caractérisé en ce qu'une partie au moins des données de demande de mise en communication sont transmises à l'emplacement distant où la comparaison avec la table de communications autorisées est réalisée.

3. Procédé selon la revendication 2, caractérisé en ce que la validation est exécutée dans le poste émetteur (10) ou à proximité de celui-ci, en fonction d'une commande provenant de l'emplacement distant.

4. Procédé selon la revendication 2, caractérisé en ce que la validation est exécutée à l'emplacement distant.

5. Procédé selon l'une quelconque des revendications précédentes, caractérisé en ce que certaines tables au moins ont des parties communes qui peuvent être modifiées.

6. Procédé selon l'une quelconque des revendications précédentes, caractérisé en ce que la table de communications autorisées est modifiée en fonction d'informations relatives à des communications établies antérieurement.

7. Procédé selon l'une quelconque des revendications précédentes, caractérisé en ce qu'il comprend, après l'établissement de la communication, la transmission de données supplémentaires par le poste émetteur (10), la comparaison d'une partie au moins de ces données supplémentaires à une table secondaire de communications autorisées, et la validation de la transmission des données supplémentaires en fonction du résultat de la comparaison à la table secondaire.

8. Installation de surveillance de communications destinée à la mise en oeuvre du procédé selon l'une quelconque des revendications 1 à 7, caractérisée en ce qu'elle comporte
   - au moins un poste émetteur (10) destiné à transmettre des données de demande de mise en communication,
   - des supports de données relatives à l'identification d'un utilisateur,
   - au moins un circuit (18) de lecture des supports de données, relié à un poste émetteur (10) ou à un groupe de postes émetteurs,
   - un circuit (12) de mémorisation d'au moins une table de communications autorisées, relié à au moins un circuit de lecture (18), et disposé à un emplacement distant de celui du poste émetteur (10),
   - un circuit de comparaison (12) relié au poste émetteur (10) et au circuit de mémorisation et destiné à comparer une partie au moins des données de demande de mise en communication provenant du poste émetteur à des données de la table des communications autorisées correspondant à l'utilisateur considéré,
   - un circuit (18) de validation d'établissement de communication, commandé par le circuit de comparaison (12) et destiné à mettre en relation le poste émetteur (10) et la ligne sortante.

9. Installation selon la revendication 8, caractérisée en ce que le circuit de comparaison (12) est disposé à l'emplacement distant avec le dispositif de mémorisation (12).

10. Installation selon la revendication 9, caractérisé en ce que le circuit de validation (12) est aussi disposé à l'emplacement distant, les circuits de mémorisation, de comparaison et de validation étant associés à un autocommutateur.

**Claims**

1. Process for monitoring, wherein informations are exchanged from transmitting stations (10) and through communication lines (16), said process including reading first data, determining an authorized communication table among authorized communication tables stored at a same remote position, generating connection request data by transmitting station, comparing at least a portion of connection request data to authorized communication table, and validating establishment of a requested connection in accordance to comparing result, characterized in that said first data are transmitting person identification data, first data are read out in or near said transmitting station, authorized communication table is determined from transmitting person identification, and authorized communication tables are modifiable.

2. Process according to claim 1, characterized in that at least a portion of connection request data are transmitted to said remote position where they are compared with said authorized communication table.

3. Process according to claim 2, characterized in that said validating step is performed in or near said transmitting station (10), in accordance with a command from said remote position.

4. Process according to claim 2, characterized in that said validating step is performed at said remote position.

5. Process according to anyone of preceding claims, characterized in that at least some tables have modifiable command portions.

6. Process according to anyone of preceding claims, characterized in that said authorized communication table is modified according to informations relating to previously established communications.

7. Process according to anyone of preceding claims, characterized in that it includes, after connection etablishment, transmitting further data by said transmitting station (10), comparing at least a portion of said further data with a secondary authorized communication table, and validating said further data transmitting in accordance with the result of comparing with said secondary table.

8. System for monitoring communications in accordance with a process according to anyone of claims 1 to 7, characterized in that it includes
   - at least a transmitting station (10) for transmitting connection request data,
   - data media for carrying data related to user identification,
   - at least a circuit (18) for reading said data media, connected to a transmitting station (10) or to a transmitting station group,
   - a circuit (12) for storing at least an authorized communication table, connected to at least a reading circuit (18) and provided at a position distant from transmitting station (10),
   - a comparing circuit (12) connected to said transmitting station (10) and to said storing circuit and for comparing at least a portion of a connection request data form said transmitting station with data from authorized communication table corresponding to related user, and
   - a circuit (18) for validating connection establishment, controlled by said comparing circuit (12) and for connecting said transmitting station (10) to output line.

9. System according to claim 8, characterized in that said comparing circuit (12) is at said remote position with said storing circuit (12).

10. System according to claim 9, characterized in that said validating circuit (12) is also at said remote position, storing, comparing and validating circuits being associated to a private automatic branch exchange.

## Patentansprüche

1. Überwachungsverfahren, in dem von Sendern (10) ausgehende und durch Verbindungsleitungen (16) vermittelte Informationen ausgetauscht werden, enthaltend folgende Verfahrensschritte:

   Lesen von ersten Daten,

   Bestimmen einer Tabelle von zulässigen Verbindungen unter den Tabellen zulässiger Verbindungen, die an dem selben entfernten Ort aufbewahrt sind,

   Bilden von Verbindungsanforderungsdaten durch den Sender,

   Vergleichen wenigstens eines Teiles der Verbindungsanforderungsdaten mit der Tabelle zulässiger Verbindungen,

   Herstellen der gewünschten Verbindung entsprechend dem Resultat des Vergleiches,

   dadurch gekennzeichnet, daß die ersten Daten die Identifikationsdaten einer sendenden Person sind, daß ferner die Bestimmung der Tabelle der zulässigen Verbindungen nach der Identifizierung der sendenden Person erfolgt und daß die Tabellen der zulässigen Verbindungen geändert werden können.

2. Verfahren nach Anspruch 1, dadurch gekennzeichnet, daß wenigstens ein Teil der Verbindungsanforderungsdaten einer sendenden Person an den entfernten Ort übermittelt werden, an dem der Vergleich mit der Tabelle zulässiger Kommunikationen durchgeführt wird.

3. Verfahren nach Anspruch 2, dadurch gekennzeichnet, daß das Herstellen der gewünschten Verbindung im Sender (10) oder in dessen Nähe in Abhängigkeit von einer vom entfernten Ort herstammenden Anfrage erfolgt.

4. Verfahren nach Anspruch 2, dadurch gekennzeichnet, daß das Herstellen der gewünschten Verbindung am entfernten Ort durchgeführt wird.

5. Verfahren nach wenigstens einem der vorhergehenden Ansprüche, dadurch gekennzeichnet, daß wenigstens einige Tabellen gemeinsame Teile haben, die geändert werden können.

6. Verfahren nach einem der vorhergehenden Ansprüche, dadurch gekennzeichnet, daß die Tabelle zulässiger Kommunikationen in Abhängigkeit von Informationen geändert werden kann, die in Relation zu vorher hergestellten Verbindungen stehen.

7. Verfahren nach einem der vorhergehenden Ansprüche, dadurch gekennzeichnet, daß es nach dem Herstellen einer Verbindung folgende Verfahrensschritte enthält:

   Übermittlung von zusätzlichen Daten durch den Sender (10),

Vergleich wenigstens eines Teils der zusätzlichen Daten mit einer zweiten Tabelle zulässiger Verbindungen

und Übermittlung zusätzlicher Daten entsprechend dem Resultat des Vergleichs mit der zweiten Tabelle.

8. Einrichtung zur überwachung von Verbindungen zur Durchführung des Verfahrens nach einem der Ansprüche 1 bis 7, dadurch gekennzeichnet, daß sie enthält
   - wenigstens einen Sender (10) zur Übermittlung von Verbindungsanforderungsdaten,
   - der Identifizierung eines Benutzers entsprechende Datenträger,
   - wenigstens eine mit einem Sender (10) oder einer Gruppe von Sendern verbundene Leseeinrichtung (18) zum Lesen der Datenträger,
   - eine Speichereinrichtung (12) zur Speicherung wenigstens einer Tabelle zulässiger Verbindungen, die mit wenigstens einer Leseeinrichtung (18) verbunden und an einem vom Sender (10) entfernten Ort angeordnet ist,
   - eine Vergleichseinrichtung (12), die mit dem Sender (10) und der Speichereinrichtung verbunden ist und wenigstens einen Teil der vom Sender herstammenden Verbindungsanforderungsdaten mit Daten der Tabelle zulässiger Verbindungen vergleicht, wobei die Vergleichseinrichtung (12) dem betreffenden Benutzer entspricht,
   - eine Einrichtung (18) zur Herstellung von Verbindungen, die durch die Vergleichseinrichtung (12) gesteuert wird und dazu dient, den Sender (10) und die Ausgangsleitung miteinander zu verbinden.

9. Einrichtung nach Anspruch 8, dadurch gekennzeichnet, daß die Vergleichseinrichtung (12) zusammen mit der Speichereinrichtung (12) an entferntem Ort angeordnet ist.

10. Einrichtung nach Anspruch 9, dadurch gekennzeichnet, daß die Einrichtung zur Herstellung von Verbindungen (12) gleichfalls an entferntem Ort angeordnet ist, wobei die Einrichtungen zur Speicherung, zum Vergleich und zur Herstellung von Verbindungen mit einem automatischen Umschalter verbunden sind.

Fig.1

Fig.2

Fig.3